# EUROPEAN PATENT SPECIFICATION

(11) **EP 1 832 062 B1**
(45) Date of publication and mention of the grant of the patent: **30.03.2016**
(21) Application number: 05822867.7
(22) Date of filing: 21.12.2005
(51) Int. Cl.: H04L 12/801

(54) **METHOD AND SYSTEM FOR SENDING RELATED DATA OVER A DIGITAL BROADCAST SYSTEM**
VERFAHREN UND SYSTEM ZUR SENDUNG VERWANDTER DATEN ÜBER EIN DIGITALES RUNDFUNKSYSTEM
PROCÉDÉ ET SYSTÈME D'ENVOI DE DONNÉES ASSOCIÉES VIA UN SYSTÈME DE DIFFUSION NUMÉRIQUE

(30) Priority: 30.12.2004 US 24402
(43) Date of publication of application: 12.09.2007
(73) Proprietor: Nokia Technologies Oy, 02610 Espoo (FI)
(72) Inventor: PAILA, Toni, FIN-10160 Degerby (FI)
(74) Representative: Anderson, Oliver Ben
(86) International application number: PCT/IB2005/003848
(87) International publication number: WO 2006/070246

(56) References cited:
- WO-A1-02/063837
- WO-A2-00/13436
- WO-A2-02/19619
- WO-A2-99/51055
- US-A1- 2004 111 746

## Description

### FIELD OF THE INVENTION

The invention relates generally to the organization of packets in digital broadcasting. More specifically, the invention provides a method and apparatus for organizing related packets into the same time slice burst in a digital broadcast system.

### BACKGROUND OF THE INVENTION

Video streaming, data streaming, and broadband digital broadcast programming have grown in popularity and sophistication. One system currently in use in Europe and elsewhere world-wide is Digital Video Broadcasting (DVB) which provides capabilities for delivery of digital content, be it data streams, audio streams, video streams, etc. The Advanced Television Systems Committee (ATSC) has also defined a digital broadband broadcast network. Both ATSC and DVB use a containerization technique in which content for transmission is placed into MPEG-2 packets serving as data containers which may be used to transport suitably digitized data including, but not limited to, High Definition television, multiple channel Standard Definition television (e.g., PAL, NTSC, and SECAM), and broadband multimedia data and interactive services.

As the use of DVB in particular has grown, it has expanded to deliver content to an ever widening range of electronic hardware. Among these are handheld devices, whose smaller power sources require that their power-hungry radio receivers be used as little as possible. To cope with these low power consumers of digital content, a system for transmission to handheld terminals is under development, known as DVB-H. Among other improvements, DVB-H adapts radio transmissions such that data is delivered to handheld terminals not as slow and constant streams, but as high capacity bursts of data sent over short periods of time. These regularly scheduled time-sliced bursts allow receiving terminals to intermittently power down their radios, providing tremendous power savings. Such a system is described in U.S. Patent Application Publication No. 20030152107 A1, entitled "Time-slice signaling for broadband digital broadcasting." It is also described in DVB Document A081, entitled "Transmission System for Handheld Terminals (DVB-H)."

A time-sliced digital broadcast system may include an internet protocol (IP) encapsulator that accepts data in the form of IP packets, bundles them for transmission as time sliced bursts, and also may calculate error correction values. The bundled datagrams may take the form of MPEG-2 transmission streams. If a particular IP encapsulator receives its packets from a wide area network such as the Internet, or if the IP encapsulator receives digital content from multiple sources, problems with ordering of IP packets may arise. In such cases, congestion, network jitter, or other delays may cause significant reordering or separation of related IP packets. As a result, related packets may end up in separate time-sliced bursts, leading to interruptions at the receiving end.

Even without network or congestion problems, it is difficult for a content source to estimate which packets will end up in the same time slice. Particular data streams or files (e.g., meta-data or encryption keys) may require that particular packets be broadcast simultaneously. At present, a flow label header field has been proposed as a standard for the IPv6 specification. This flow label is intended to allow for the identification of related packets. The specification does not, however, disclose how a flow label would be used in a digital broadcast network. It would therefore be useful to provide in a time-slicing digital broadcast system a method for bundling related IP packets, identified by a supplied flow label, into the same time slice so that related packets are received in an organized and timely fashion by a consumer of digital content.

WO 02/063837 A1 describes an arrangement and a method for flow control of data packets in a communications system supporting communication of packet data.

WO 02/19619 A2 describes a system in which IP packets classified according to QoS are mapped onto radio bearers according to various mechanisms.

### SUMMARY OF THE INVENTION

The invention is defined by the claims.

The following presents a simplified summary of the embodiments of systems and methods described herein. This summary is not an extensive overview. It is not intended to identify key or critical elements. The following summary merely presents some concepts as described herein in a simplified form as a prelude to the more detailed description provided below.

A first example provides a method for forwarding a packet in a time-sliced digital broadcast system. A received data packet is tagged with an indication at least partly common to related packets, such as a flow label value according to the IPv6 protocol. Based on that value, the packet is assigned to a flow- specific buffer. Contents of the buffer are then scheduled for delivery within a time- sliced burst, and subsequently are forwarded.

A second example provides a time-sliced digital broadcast system which includes an IP encapsulator and a time-sliced burst radio transmitter. The IP encapsulator includes buffer memory, and a processor which assigns a received data packet into a flow-specific buffer based on the data packet's flow label value or other indication at least partly common to packets relating to the same flow. Contents of the buffer, including the data packet, are scheduled for delivery and then encapsulated into a common time-sliced burst.

A third example provides a time-sliced digital broadcast system which includes an IP encapsulator and a transmitter. The IP encapsulator receives IPv6 packets, each of which comprises a flow label value, and assigns each to a flow-specific buffer. The IP encapsulator selects a current buffer and encapsulates the packets into a time-sliced burst which is then forwarded for transmission.

### BRIEF DESCRIPTION OF THE DRAWINGS

Figure 1 illustrates an example of a suitable digital broadcast system in which the invention may be implemented.
Figure 2 depicts a data flow diagram providing a closer look at a portion of an IP encapsulator according to one or more embodiments of the invention.
Figure 3 depicts a simple graph of data flow into an IP encapsulator over time according to one or more embodiments of the invention.
Figure 4 depicts a rough graph of buffer size over time for a buffer according to one or more embodiments of the invention.
Figure 5 depicts a rough graph of buffer size over time for a buffer according to one or more embodiments of the invention.
Figure 6 depicts a rough graph of buffer size over time for a best effort buffer according to one or more embodiments of the invention.
Figure 7 depicts a graph of burst output over time according to one or more embodiments of the invention.
Figure 8 is a flowchart for a method for selecting flow labels for related packets according to one or more embodiments of the invention.
Figure 9 is a flowchart for a method for assigning packets to buffers based on their flow labels according to one or more embodiments of the invention.
Figure 10 is a flowchart for a method for scheduling buffered packets into time slices according to one or more embodiments of the invention.

### DETAILED DESCRIPTION OF THE INVENTION

In the following description of the various embodiments, reference is made to the accompanying drawings, which form a part hereof, and in which is shown by way of illustration various embodiments in which the invention may be practiced. It is to be understood that other embodiments may be utilized and structural and functional modifications may be made without departing from the scope and spirit of the present invention.

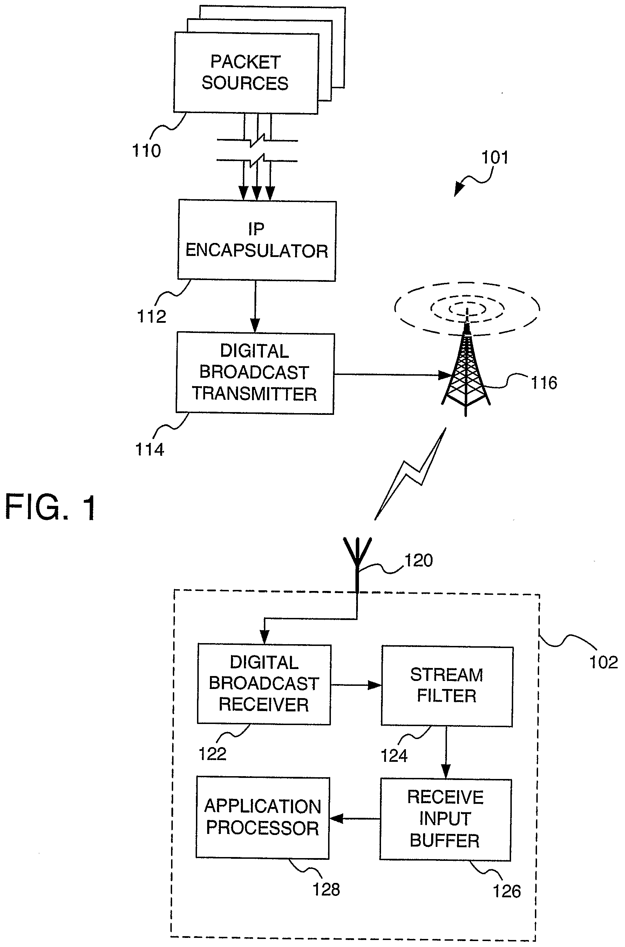

FIG. 1 illustrates an example of a suitable digital broadcast system in which the invention may be implemented. The time-slicing digital broadcast system depicted comprises transmitter system 101 and mobile terminal 102. Packet sources 110 make available a multitude of data signals to transmitter system 101. The data signals may travel to the transmitter system directly, through direct connections, or indirectly via the Internet or another packet network. The data signals are ultimately made available for reception by mobile terminal 102 and may provide a user with video streams, audio streams, meta-data, encryption keys, data associated with conditional access and/or digital rights management data, or other data streams. Metadata that is related to content data and which should travel together may include ordering and/or accessing information for the said content.

The data signals are made available to Internet Protocol (IP) encapsulator 112 in the form of data packets. These packets of data may comprise packets formed using a standard network layer protocol, such as conventional IPv4 or IPv6. Packets arriving at IP encapsulator 112 may undergo a series of traffic shaping, buffering and synchronizing techniques. Related packets are repackaged for delivery in the same time-sliced burst which is delivered to digital broadcast transmitter 114 for broadcast over antenna 116.

At mobile terminal 102, antenna 120 receives the time-sliced burst broadcast by transmitter system 101 and delivers it to digital broadcast receiver 122. Stream filter 124 filters the data so that only a portion is available to a user, supplying the data to receive input buffer 126, which stores the large amount of data provided in the burst. Buffer 126 gradually depletes the data, supplying it to application processor 130, which may comprise a video viewer, an audio player, an electronic system guide, or other consumer of digital content.

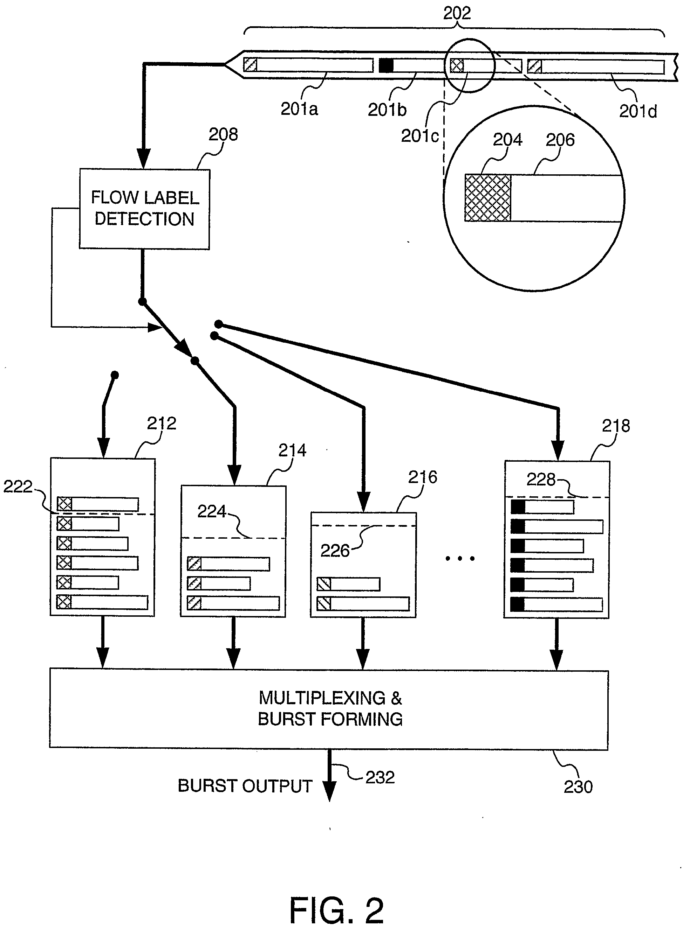

FIG. 2 depicts a data flow diagram providing a more detailed view of a portion of IP encapsulator 112 according to one or more embodiments of the invention. In this portion of IP encapsulator 112, packets 202 are processed by flow label detector 208. Each packet may contain a flow label header field 204, and data payload 206. A flow label may constitute a 20-bit integer assigned to a flow label header field in a packet header. Flow labels are assigned by a packet source, and are included to signal which packets are related and should travel together. Examples of such related data packets include packets carrying encryption keys and/or conditional access data and content data associated with packets carrying video data, for example, associated audio and/or textual data (e.g., subtitles). When a source provides the same flow label to two or more packets, those packets should travel together through a communication path. However, if no flow label is assigned to a particular packet, then it may be considered "best effort," and may be forwarded in no particular order. In the absence of an IPv6 flow label header field, packets may be provided with an indication that they are related instead of the flow label through some other method, for example having an indication similar to a flow label set at an identifiable location inside the packet payload. Moreover, the term flow label as used here may include the packet's flow label value combined with its source address. These two values may be combined in order to prevent duplication of flow labels from different sources. In FIG. 2, packets with a flow label assigned have a pattern, for example the cross hatch pattern for flow label 204 of packet 201 c. Packets with the same flow label value assigned in the figure have the same pattern. Packets without flow labels or with "best effort" flow labels are depicted as solid black, e.g. packet 201b.

As each packet's flow label is examined, each is assigned to a flow-label specific buffer based upon its flow label value. Here, first buffer 212, second buffer 214, third buffer 216, and best effort buffer 218 are representative, as flow buffers may be more numerous and be virtual in character. Although their contents are depicted as stacked packets with common flow labels, they may be stored in virtually any configuration. In a virtual buffer embodiment, all packets reside in a single memory construct in no particular order and are assigned virtual buffer values. These values may be assigned in a table having an entry for each of the packets, each entry comprising a buffer identifier and optionally a size of a packet (so total buffer size may be calculated). Alternatively, separate physical buffer memories of varying sizes may be used for each flow label. Additional buffers (not shown), whether virtual or physical, may be necessary depending on the variety of flow labels.

Each buffer may have several thresholds associated with it. First buffer 212 may have size threshold 222 based upon the amount of data it is capable of holding. Second buffer 214 may have smaller size threshold 224. Each buffer's size threshold may vary depending upon any number of factors, including, but not limited to, the size of the packets being stored, the rate at which packets are arriving, and the size of the memory. Third buffer 216 may have size threshold 226, and best effort buffer 218 may also have a size threshold 228. As the amount of data in first buffer 212 exceeds its size threshold 222, an alert may be triggered signaling that the buffer needs to be emptied, lest it overflow. Buffers may also have a time threshold (not shown) associated with each. A timer may track how long the oldest packet has been stored in a particular buffer. Such a timer may be restarted each time the contents of the buffer are emptied. In order to prevent packets from getting "stale," the time threshold may trigger an alert signaling that a particular buffer should be emptied.

As time and size thresholds of buffers are triggered, the contents of each buffer are forwarded for multiplexing and burst forming 230 so that they may ultimately be encapsulated together, producing a burst output 232. One form of encapsulation which may be used is Multiprotocol Encapsulation (MPE), which may produce an MPEG-2 encoded transport stream (MPEG2-TS). Ultimately, this burst is forwarded for broadcast.

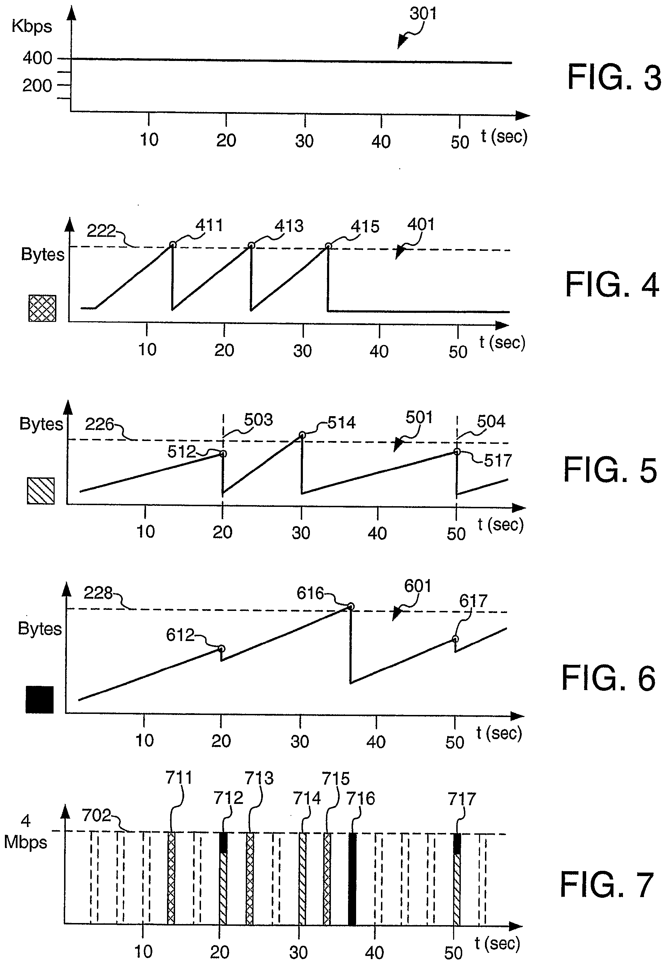

By way of introduction, FIGS. 3-7 depict graphs of data over time according to one or more embodiments of the invention. FIG. 3 depicts a graph 301 of data flow into IP encapsulator 112 over time. The relatively constant stream of IP packets, here set at about 400kbps, is ultimately buffered and broadcast in time-sliced bursts by digital broadcast transmission system 101.

As IP packets enter the flow label detection component of IP encapsulator 112, they are assigned to buffers based on their flow label values. FIGS. 4-6 depict buffer size over time for a few example buffers. Other buffers assigned to other flow label values may be in use, but are not shown. FIG. 4 depicts a rough graph 401 of buffer size over time for first buffer 212 having size threshold 222. Although graph 401 depicts smooth increases in buffer size, packets with the flow label particular to this buffer may arrive in much more haphazard fashion, and increases may in fact be more or less stepped. Here, over time, buffer 212 fills, exceeding its threshold size 222 at point 411. At the next available time-slice, the contents of buffer 212 are passed for multiplexing and burst forming, using a first-in-first-out (FIFO) algorithm. This process of forwarding buffer contents continues as more packets arrive and are assigned to buffer 212. Each time the amount of data in buffer 212 exceeds buffer threshold 222, such as at points 413 and 415, the process of forwarding is repeated. After point 415, it appears that no more packets will arrive. This may mean that the supply of packets labeled with the particular flow label has been exhausted. After some designated period of inactivity, the buffer space may be reclaimed and possibly reallocated for another flow label.

FIG. 5 depicts a rough graph 501 of buffer size over time for third buffer 216 having size threshold 226. Packets labeled with the flow label particular to buffer 216 arrive, in this example, at a rate slower than buffer 212. A time threshold 503 for this buffer may be set at 20 seconds from the previous forward event. At point 512, the size of buffer 216 has not exceeded size threshold 226, but the oldest packet in the buffer has surpassed time threshold 503, and so the packets in the buffer are forwarded for multiplexing and burst forming. At point 514, the rate of packets increased, and size threshold 226 is exceeded before another time threshold is exceeded. As with buffer 212, the contents of buffer 216 are forwarded, and a new time threshold is set. At point 517, time threshold 504 is exceeded before size threshold 226 is exceeded, and again the contents of buffer 216 are forwarded.

FIG. 6 depicts a rough graph 601 of buffer size over time for best effort buffer 218 having size threshold 228. Best effort packets stored in buffer 218 might not have a flow label or may have a particular best effort flow label. Best effort packets are assigned to best effort buffer 218 at a relatively constant rate. At point 612, a quantity of best effort packets is forwarded in order to fill the unused portion of a time-sliced burst. At point 616, the size of best effort buffer 218 exceeds size threshold 228, and a larger quantity of best effort packets is forwarded for multiplexing and burst forming. At point 617, as with point 612, a quantity of best effort packets is forwarded in order to fill the unused portion of a time-sliced burst.

FIG. 7 depicts a graph of burst output 232 over time. As packets from buffers are forwarded for multiplexing and burst forming, they are encapsulated into high capacity bursts. These bursts are broadcast at set intervals, and each burst, in addition to delivering the encapsulated packets, informs receivers of the time for the next burst. In this manner, mobile terminal 102 may power down its radio in-between bursts. Here, bursts of data are broadcast at a rate of 4 Mbps at predictable intervals of time, approximately one every 3.33 seconds. Their duration may be brief, perhaps lasting 0.35 seconds, effectively delivering 420 Kbps worth of data. These values may obviously differ, depending on the amount of data being received by IP encapsulator 112, the number of IP encapsulators sharing a particular broadcast channel, the radio frequency used, and so forth. Although only one set of bursts is shown here, additional sets of bursts may be interleaved, providing additional "channels" with time-shifted bursts.

Here, burst 711 coincides with the depletion of first buffer 212 at point 411. The contents of burst 711 include packets from buffer 212, as indicated by the pattern of the burst. Other packets from other buffers not shown may also be included with burst 711. In addition, packets from other buffers may be broadcast in bursts not identified in FIG. 7. Bursts 713 and 715 also include packets from first buffer 212, coinciding with points 413 and 415. Bursts 712 and 717 include packets from both third buffer 216 and best effort buffer 218. Burst 712 coincides with points 512 and 612 on their respective graphs, as burst 717 coincides with points 517 and 617. Burst 714 coincides with point 514, where packets from third buffer 216 were forwarded when the buffer size exceeded threshold 226. Finally, burst 716 coincides with point 616, where packets from best effort buffer 218 were forwarded when the buffer size exceeded threshold 228.

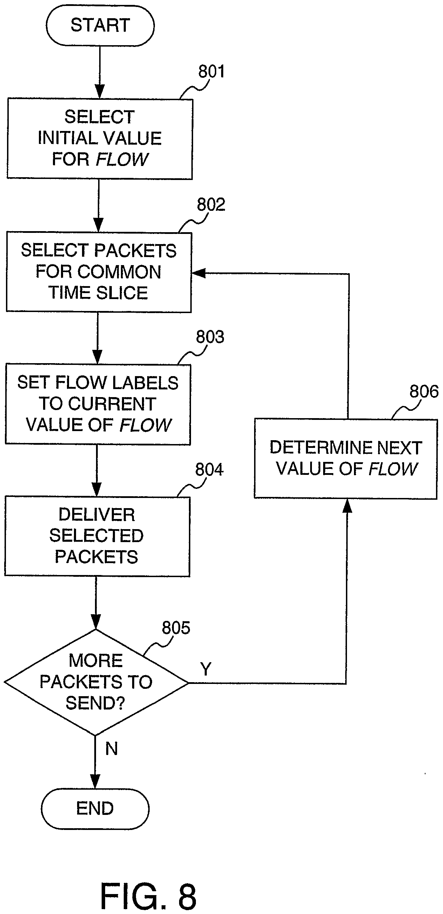

With additional reference to FIG. 1, FIG. 8 is a flowchart for a method for selecting flow labels for related packets according to one or more embodiments of the invention. Such a method may be implemented by a packet source 110 sending related packets. Here, at step 801, a packet source selects an initial value for packet flow labels, here dubbed flow. The initial value for flow may be predetermined for that particular packet source, or determined at random. At step 802, a group of data packets are selected for delivery within a common time slice. These packets may be a part of a larger selection of packets, perhaps a data stream carrying video and audio. The packet source may know the size of time-sliced bursts downstream, and therefore be able to intelligently select a group of packets that will fit within a single burst. Alternatively, the packet source may select a group of packets which are substantively related, for example, audio data and video data for the same scene, or all the packets representing a particular data file, such as electronic system guide information or a decryption key.

Once related packets are selected, at step 803, the packet source sets the flow labels of each packet to the value of flow. This may involve setting a header field, such as the flow label field in an IPv6 packet, or using some other method for labeling the packet. Next, at step 804, the selected packets are made available for delivery to the transmission system 101. This may be via direct connection to IP encapsulator 112, or via an indirect method such as the Internet, a wireless network, or some other packet network. If, at decision 805, more related packets are ready for sending, then at step 806, a new value for flow is selected. If an additional set of packets is related to the previous packets, then they may receive the same value of flow. Alternatively, this second set of packets may receive a value for flow which was incremented. This may serve as a signal downstream that the second set of packets are related to the first set, but are to be sent after the first set. If a second set of packets is not related, then the new value for flow may be incremented by some constant, or assigned a new random value. Control is then returned to step 802. If, at decision 805, no more packets are ready for sending, then the method terminates.

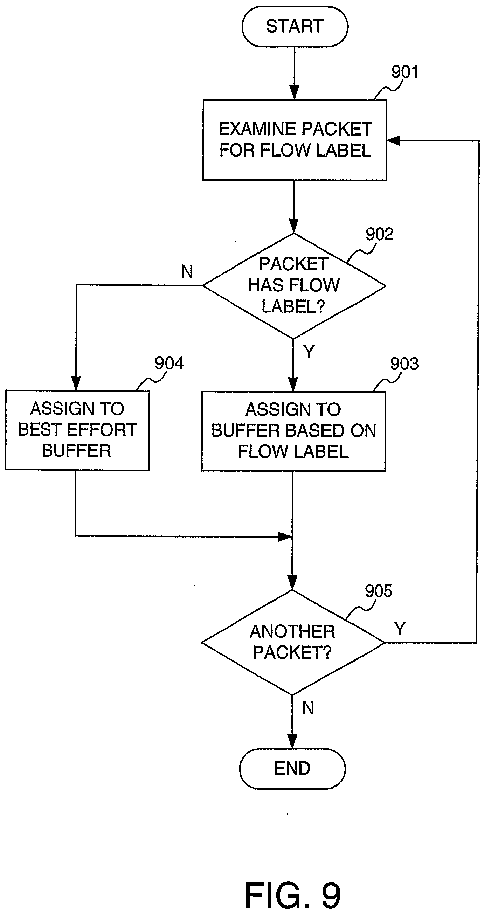

FIG. 9 is a flowchart for a method for assigning packets to buffers based on their flow labels according to one or more embodiments of the invention. This method may be implemented by IP encapsulator 112, or any similar device responsible for sorting and forwarding packets based on their flow labels. Here, as a packet is prepared for sorting in step 901, its flow label is examined. If the packet has a flow label, at decision 902, it is assigned to a buffer based on that flow label at step 903. If this is the first packet received for a particular flow label, then a buffer may need to be allocated, and its size and various thresholds determined. If the packet has no flow label, it is assigned to a best effort buffer at step 904. If another packet is read for sorting, at decision 905, then the next packet is examined as control returns to step 901. If there are no more packets, then the method terminates.

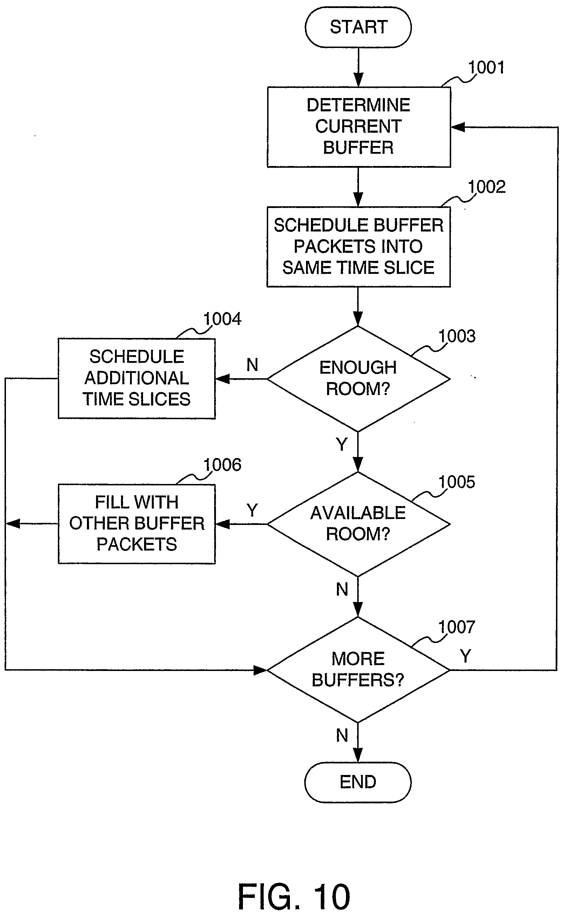

FIG. 10 is a flowchart for a method for scheduling buffered packets into time slices according to one or more embodiments of the invention. Step 1001 starts by determining the current buffer to be scheduled. This determination may be made on the basis of which buffer exceeds or is about to exceed either its size and/or time thresholds. Alternatively, the determination of a current buffer to be scheduled may be based on scheduling the buffer with the lowest numeric flow label. This assumes that the flow labels have been assigned in a necessarily sequential fashion. Any other method which prioritizes the scheduling of buffered packets may be used; especially those methods which help ensure the timely transmission of packets.

Once a buffer is selected the packets within that buffer are scheduled, at step 1002, into an upcoming time slice burst. Alternatively, the packets may immediately be forwarded on for multiplexing and burst forming. At decision 1003, a determination is made as to whether there is enough room in the next time slice for the contents of the current buffer. If there is not enough room for the contents of the current buffer, then leftover packets may be scheduled into future time slices at step 1004. If there is enough room, then at decision 1005, a determination is made as to whether there is available room left over in the time slice. If so, at step 1006, additional packets may be scheduled into the time slice. These additional packets may come from the best effort buffer, or may include packets with other flow labels. At decision 1007, after the buffer has been handled, if more buffers need to be scheduled, then control returns back to step 1001, and a next buffer is determined. Otherwise, the method may terminate.

It should be noted that if additional packets arrive in a buffer between a time of scheduling and a time of forwarding, those packets may or may not be included in the same time slice as the earlier scheduled packets. This may depend on the number of additional packets, available room in the time slice, and whether or not best effort packets were used to fill the time slice.

While the invention has been described with respect to specific examples including presently preferred modes of carrying out the invention, those skilled in the art will appreciate that there are numerous variations and permutations of the above described devices and techniques that fall within the spirit and scope of the invention as set forth in the appended claims.

## Claims

1. A method comprising:
receiving a plurality of data packets (202), wherein each data packet of the plurality of data packets includes an indication at least partly common to related data packets of the plurality of data packets;
assigning each data packet of the plurality of data packets to one of a plurality of buffer memories (212; 214; 216; 218), wherein each of the plurality of buffer memories comprises only data packets having the same indication;
selecting a current buffer memory from among the plurality of buffer memories;
scheduling data packets from the current buffer memory for delivery in a time-sliced burst (711; 713; 715);
selecting a next buffer memory from among the plurality of buffer memories;
scheduling data packets from the next buffer memory for delivery in a second time-sliced burst;
forwarding the data packets from the current buffer memory for transmission in the time-sliced burst and forwarding the data packets from the next buffer memory for transmission in the second time-sliced burst.

2. The method of claim 1, wherein the plurality of data packets comprises IPv6 packets.

3. The method of claim 2, wherein in each data packet of the plurality of data packets the indication comprises a flow label value.

4. The method of any preceding claim, further comprising:
encapsulating the data packets from the current buffer memory into the time-sliced burst and encapsulating the data packets from the next buffer memory into the second time-sliced burst.

5. The method of claim 4, wherein the time-sliced burst comprises an MPEG-2 transport stream.

6. A computer-readable medium for storing computer-executable instructions for performing the steps recited in any preceding claim.

7. A system, comprising:
an IP encapsulator (112), comprising:
a plurality of buffer memories;
a processor, wherein the processor is configured to perform the steps of:
receiving a plurality of data packets (202), wherein each data packet of the plurality of data packets comprises an indication at least partly common to related data packets of the plurality of data packets;
assigning each data packet of the plurality of data packets to one of the plurality of buffer memories (212; 214; 216; 218), wherein each of the plurality of buffer memories comprises only data packets having the same indication;
selecting a current buffer memory from among the plurality of buffer memories;
scheduling data packets from the current buffer memory for delivery in a time-sliced burst (711; 713; 715);
selecting a next buffer memory from among the plurality of buffer memories;
scheduling data packets from the next buffer memory for delivery in a second time-sliced burst;
encapsulating data packets from the current buffer memory into the time-sliced burst and data packets from the next buffer memory into the second time-sliced burst; and
forwarding the first time-sliced burst for transmission and forwarding the second time-sliced burst for transmission; and
a transmitter capable of transmitting the time-sliced burst and the second time-sliced burst.

8. The system of claim 7, wherein the time-sliced burst comprises an MPEG-2 transport stream.

9. The system of claim 7, wherein the plurality of data packets comprises IPv6 packets.

10. The system of claim 9, wherein in each data packet of the plurality of data packets the indication comprises a flow label value.

11. The system of claim 7, wherein the IP encapsulator is configured to assign each data packet of the plurality of data packets to one of the plurality of buffer memories by creating an entry in a table for each data packet of the plurality of data packets, the entry comprising a buffer identifier and a size of the data packet.

12. The system of claim 7 or claim 11, wherein the IP encapsulator is configured to select the current buffer memory based on a buffer size threshold being exceeded.

13. The system of claim 7 or claim 11, wherein the IP encapsulator is configured to select the current buffer memory based on a buffer time threshold being exceeded.

14. The system of claim 8, wherein each data packet of the plurality of data packets and its related data packets of the plurality of data packets comprise content data and associated access data.

15. The system of claim 14, wherein the associated access data comprises an encryption key.

16. The system of claim 14, wherein the associated access data comprises conditional access data.

17. The system of claim 14, wherein the plurality of data packets comprise IPv6 packets, and in each data packet of the plurality of data packets the indication comprises a flow label value.

## Patentansprüche

1. Verfahren, umfassend:
Empfangen mehrerer Datenpakete (202), wobei jedes Datenpaket der mehreren Datenpakete einen Hinweis enthält, der zumindest teilweise für verwandte Datenpakete der mehreren Datenpakete üblich ist;
Zuweisen von jedem Datenpaket der mehreren Datenpakete zu einem von mehreren Pufferspeichern (212; 214; 216; 218), wobei jeder der mehreren Pufferspeicher nur Datenpakete umfasst, die denselben Hinweis haben;
Auswählen eines aktuellen Pufferspeichers aus den mehreren Pufferspeichern;
Festlegen von Datenpaketen aus dem aktuellen Pufferspeicher zur Lieferung in einem zeitlich zugeteilten Burst (711; 713; 715);
Auswählen eines nächsten Pufferspeichers aus den mehreren Pufferspeichern;
Festlegen von Datenpaketen aus dem nächsten Pufferspeicher zur Lieferung in einem zweiten zeitlich zugeteilten Burst;
Übermitteln der Datenpakete aus dem aktuellen Pufferspeicher zur Sendung im zeitlich zugeteilten Burst und Übermitteln der Datenpakete aus dem nächsten Pufferspeicher zur Sendung im zweiten zeitlich zugeteilten Burst.

2. Verfahren nach Anspruch 1, wobei die mehreren Datenpakete IPv6-Pakete umfassen.

3. Verfahren nach Anspruch 2, wobei in jedem Datenpaket der mehreren Datenpakete der Hinweis einen Routingwert umfasst.

4. Verfahren nach einem der vorhergehenden Ansprüche, ferner umfassend:
Verkapseln der Datenpakete aus dem aktuellen Pufferspeicher in den zeitlich zugeteilten Burst, und
Verkapseln der Datenpakete aus dem nächsten Pufferspeicher in den zweiten zeitlich zugeteilten Burst.

5. Verfahren nach Anspruch 4, wobei der zeitlich zugeteilte Burst einen MPEG-2-Transportstrom umfasst.

6. Computerlesbares Medium zum Speichern von computerausführbaren Anweisungen zum Ausführen der Schritte, die in einem vorhergehenden Anspruch angeführt wurden.

7. System, umfassend:
einen IP-Encapsulator (112), umfassend:
mehrere Pufferspeicher;
einen Prozessor, wobei der Prozessor zum Ausführen der folgenden Schritte ausgelegt ist:
Empfangen mehrerer Datenpakete (202), wobei jedes Datenpaket der mehreren Datenpakete einen Hinweis enthält, der zumindest teilweise für verwandte Datenpakete der mehreren Datenpakete üblich ist;
Zuweisen von jedem Datenpaket der mehreren Datenpakete zu einem von mehreren Pufferspeichern (212; 214; 216; 218), wobei jeder der mehreren Pufferspeicher nur Datenpakete umfasst, die denselben Hinweis haben;
Auswählen eines aktuellen Pufferspeichers aus den mehreren Pufferspeichern;
Festlegen von Datenpaketen aus dem aktuellen Pufferspeicher zur Lieferung in einem zeitlich zugeteilten Burst (711; 713; 715);
Auswählen eines nächsten Pufferspeichers aus den mehreren Pufferspeichern;
Festlegen von Datenpaketen aus dem nächsten Pufferspeicher zur Lieferung in einem zweiten zeitlich zugeteilten Burst;
Verkapseln von Datenpaketen aus dem aktuellen Pufferspeicher in den zeitlich zugeteilten Burst und von Datenpaketen aus dem nächsten Pufferspeicher in den zweiten zeitlich zugeteilten Burst; und Übermitteln des ersten zeitlich zugeteilten Bursts zum Senden und Übermitteln des zweiten zeitlich zugeteilten Bursts zum Senden; und
einen Sender, der fähig ist, den zeitlich zugeteilten Burst und den zweiten zeitlich zugeteilten Burst zu senden.

8. System nach Anspruch 7, wobei der zeitlich zugeteilte Burst einen MPEG-2-Transportstrom umfasst.

9. System nach Anspruch 7, wobei die mehreren Datenpakete IPv6-Pakete umfassen.

10. System nach Anspruch 9, wobei in jedem Datenpaket der mehreren Datenpakete der Hinweis einen Routingwert umfasst.

11. System nach Anspruch 7, wobei der IP-Encapsulator zum Zuweisen jedes Datenpaketes der mehreren Datenpakete zu einem der mehreren Pufferspeicher ausgelegt ist, durch Erzeugen eines Eintrags in einer Tabelle für jedes Datenpaket der mehreren Datenpakete, wobei der Eintrag einen Puffer-Identifikator und eine Größe des Datenpaketes umfasst.

12. System nach Anspruch 7 oder 11, wobei der IP-Encapsulator zum Auswählen des aktuellen Pufferspeichers ausgelegt ist, auf der Basis eines Puffergrößenschwellwertes, der überschritten ist.

13. System nach Anspruch 7 oder 11, wobei der IP-Encapsulator zum Auswählen des aktuellen Pufferspeichers ausgelegt ist, auf der Basis eines Pufferzeitschwellwertes, der überschritten ist.

14. System nach Anspruch 8, wobei jedes Datenpaket der mehreren Datenpakete und ihre verwandten Datenpakete der mehreren Datenpakete Inhaltsdaten und zugehörige Zugangsdaten umfassen.

15. System nach Anspruch 14, wobei die zugehörigen Zugangsdaten einen Verschlüsselungsschlüssel umfassen.

16. System nach Anspruch 14, wobei die zugehörigen Zugangsdaten bedingte Zugangsdaten umfassen.

17. System nach Anspruch 14, wobei die mehreren Datenpakete IPv6-Pakete umfassen und in jedem Datenpaket der mehreren Datenpakete der Hinweis einen Routingwert umfasst.

## Revendications

1. Procédé comprenant les étapes suivantes :
recevoir une pluralité de paquets de données (202), chaque paquet de données de la pluralité de paquets de données comportant une indication au moins partiellement commune aux paquets de données associés de la pluralité de paquets de données ;
affecter chaque paquet de données de la pluralité de paquets de données à une mémoire tampon parmi une pluralité de mémoires tampons (212 ; 214 ; 216 ; 218), chacune de la pluralité de mémoires tampons comprenant uniquement des paquets de données ayant la même indication ;
sélectionner une mémoire tampon courante parmi la pluralité de mémoires tampons ;
planifier des paquets de données à partir de la mémoire tampon courante pour une distribution dans une rafale à découpage temporel (711 ; 713 ; 715) ;
sélectionner une mémoire tampon suivante parmi la pluralité de mémoires tampons ;
planifier des paquets de données à partir de la mémoire tampon suivante pour une distribution dans une deuxième rafale à découpage temporel ;
expédier les paquets de données à partir de la mémoire tampon courante pour une transmission dans la rafale à découpage temporel et expédier les paquets de données à partir de la mémoire tampon suivante pour une transmission dans la deuxième rafale à découpage temporel.

2. Procédé selon la revendication 1, dans lequel la pluralité de paquets de données comprend des paquets IPv6.

3. Procédé selon la revendication 2 dans lequel, dans chaque paquet de données de la pluralité de paquets de données, l'indication comprend une valeur d'étiquette de flux.

4. Procédé selon l'une quelconque des revendications précédentes, comprenant en outre l'étape suivante :
encapsuler les paquets de données à partir de la mémoire tampon courante dans la rafale à découpage temporel et encapsuler les paquets de données à partir de la mémoire tampon suivante dans la deuxième rafale à découpage temporel.

5. Procédé selon la revendication 4, dans lequel la rafale à découpage temporel comprend un flux de transport MPEG-2.

6. Support lisible par ordinateur permettant de stocker des instructions exécutables par un ordinateur destinées à exécuter les étapes selon l'une quelconque des revendications précédentes.

7. Système, comprenant :
un encapsulateur IP (112), comportant :
une pluralité de mémoires tampons ;
un processeur, le processeur étant configuré pour exécuter les étapes suivantes :
recevoir une pluralité de paquets de données (202), chaque paquet de données de la pluralité de paquets de données comprenant une indication au moins partiellement commune aux paquets de données associés de la pluralité de paquets de données ;
affecter chaque paquet de données de la pluralité de paquets de données à une mémoire tampon parmi la pluralité de mémoires tampons (212 ; 214 ; 216 ; 218), chacune de la pluralité de mémoires tampons comportant uniquement des paquets de données ayant la même indication ;
sélectionner une mémoire tampon courante parmi la pluralité de mémoires tampons ;
planifier des paquets de données à partir de la mémoire tampon courante pour une distribution dans une rafale à découpage temporel (711 ; 713 ; 715) ;
sélectionner une mémoire tampon suivante parmi la pluralité de mémoires tampons ;
planifier des paquets de données à partir de la mémoire tampon suivante pour une distribution dans une deuxième rafale à découpage temporel ;
encapsuler des paquets de données à partir de la mémoire tampon courante dans la rafale à découpage temporel et des paquets de données à partir de la mémoire tampon suivante dans la deuxième rafale à découpage temporel ; et
expédier la première rafale à découpage temporel pour une transmission et expédier la deuxième rafale à découpage temporel pour une transmission ; et
un émetteur capable de transmettre la rafale à découpage temporel et la deuxième rafale à découpage temporel.

8. Système selon la revendication 7, dans lequel la rafale à découpage temporel comprend un flux de transport MPEG-2.

9. Système selon la revendication 7, dans lequel la pluralité de paquets de données comprend des paquets IPv6.

10. Système selon la revendication 9 dans lequel, dans chaque paquet de données de la pluralité de paquets de données, l'indication comprend une valeur d'étiquette de flux.

11. Système selon la revendication 7, dans lequel l'encapsulateur IP est configuré pour affecter chaque paquet de données de la pluralité de paquets de données à une mémoire tampon parmi la pluralité de mémoires tampons en créant une entrée dans une table pour chaque paquet de données de la pluralité de paquets de données, l'entrée comprenant un identifiant de mémoire tampon et une taille du paquet de données.

12. Système selon la revendication 7 ou la revendication 11, dans lequel l'encapsulateur IP est configuré pour sélectionner la mémoire tampon courante en fonction d'un dépassement de seuil de taille de mémoire tampon.

13. Système selon la revendication 7 ou la revendication 11, dans lequel l'encapsulateur IP est configuré pour sélectionner la mémoire tampon courante en fonction d'un dépassement de seuil de temps de mémoire tampon.

14. Système selon la revendication 8, dans lequel chaque paquet de données de la pluralité de paquets de données et ses paquets de données associés de la pluralité de paquets de données comprend des données de contenu et des données d'accès connexes.

15. Système selon la revendication 14, dans lequel les données d'accès connexes comprennent une clé de cryptage.

16. Système selon la revendication 14, dans lequel les données d'accès connexes comprennent des données d'accès conditionnelles.

17. Système selon la revendication 14 dans lequel la pluralité de paquets de données comprend des paquets IPv6 et, dans chaque paquet de données de la pluralité de paquets de données, l'indication comporte une valeur d'étiquette de flux.
